# EUROPEAN PATENT SPECIFICATION

(11) **EP 2 260 612 B1**
(45) Date of publication and mention of the grant of the patent: **14.09.2011**
(21) Application number: 08735607.7
(22) Date of filing: 31.03.2008
(51) Int. Cl.: H04L 12/18, H04L 12/56

(54) **BANDWIDTH SIGNALLING**
BANDBREITENSIGNALISIERUNG
SIGNALISATION DE BANDE PASSANTE

(43) Date of publication of application: 15.12.2010
(73) Proprietor: Telefonaktiebolaget L M Ericsson (PUBL), 16483 Stockholm (SE)
(72) Inventor: MARTINOTTI, Riccardo, I-17100 Savona (IT); SANGUINETI, Antonella, I-16043 Chiavari (IT); FIORONE, Raoul, I-16035 Rapallo (IT)
(74) Representative: Stasiewski, Piotr Grzegorz
(86) International application number: PCT/EP2008/053812
(87) International publication number: WO 2009/121393

(56) References cited:
- EP-A- 1 119 134
- EP-A- 1 589 706
- US-A1- 2007 081 459
- US-A1- 2007 106 782
- CAIN B ET AL: "Internet Group Management Protocol, Version 3" RFC 3376, INTERNET ENGINEERING TASK FORCE, 1 October 2002 (2002-10-01), XP015009135
- SIEMENS COMMUNICATIONS AND JUNIPER NETWORKS, INC.: "High Quality and Resilient IPTV Multicast Architecture"[Online] 6 February 2007 (2007-02-06), XP002507315 Retrieved from the Internet: URL:http://web.archive.org/web/20070206024 500/http://www.juniper.net/solutions/liter ature/white_papers/iptv_multicast.pdf> [retrieved on 2008-12-08]

## Description

### TECHNICAL FIELD

This invention relates to a telecommunication network for transporting multicast content from at least one content source to at least one content receiver. It also relates to a content source, a content receiver and a switch node adapted to form part of a telecommunication network suitable for multicast communication.

It furthermore relates to methods of controlling the flow of multicast content and a method of informing nodes of a telecommunication network of the bandwidth requirement of multicast content.

### BACKGROUND

A multicast service is characterised by a connectivity scheme that allows a single source to deliver information to many destinations over a network. The source is required to send a message only once, which is addressed to a multicast group address. The nodes that make up the network determine where the message needs to be sent, and replicate it where necessary, to reach the multiple destinations that have registered their interest in receiving messages addressed to the multicast group address. The nodes may also determine which destinations are allowed to receive content from an accounting and billing perspective. IP Multicast is a particular implementation for supporting multicast services over an Internet Protocol based network.

A content source and at least one content receiver use an IP multicast address to both send and to request to receive the content. The content receivers use the IP multicast address to inform relevant nodes on the network, known as multicast agents, that they would like to receive the multicast content sent to that multicast address. The content source uses the IP multicast address as the IP destination address in the multicast content it sends.

Internet Group Management Protocol (IGMP) is a communication protocol typically used by content receivers to "join" and "leave" a multicast group. An IGMP message is used by the content receiver to register its membership of a multicast group with a local multicast agent. The Protocol Independent Multicast (PIM) protocol is a protocol used between the local multicast agent and any remote multicast agents. In particular, PIM is used to generate a multicast distribution tree that facilitates the direction of multicast content from the content source to the content receivers.

Switches that form nodes in a network and protocols used in a network can be classified by the layer they fit into in a model of network architecture, such as the TCP/IP five layer model or the ISO/OSI reference model. Layer 2 is the data link layer and layer 3 is the network layer. Thus, a layer 2 switch uses data link layer information and protocols to forward data and a layer 3 switch (generally known as a router) uses network layer information and protocols to forward data. IGMP and PIM are layer 3 protocols. Thus, network equipment that forms a node in a network that operates at layer 2 is typically known as a switch and equipment that operates at layer 3 is typically known as a router. However, such equipment will be referred to herein as a layer 2 switch or a layer 3 switch.

Multicast agents are layer 3 switches or equipment in the network that use the IP multicast address to forward the multicast content to the appropriate parts of the network. Layer 2 switches forward data using layer 2 information and protocols, and therefore they will normally forward data addressed to multicast MAC addresses to all the ports involved in that particular multicast service. In this latter case, it is the recipients of the multicast data that must filter and discard data sent to multicast groups that they are not a member of (or some intermediate layer 3 enabled node).

Layer 2 switches (or equivalent network equipment) that can process layer 3 multicast communication protocols, while retaining layer 2 based forwarding capability, are known. These layer 2 switches are IGMP aware, since they can intercept and properly process IGMP messages. The most common functionality to be implemented in the layer 2 switches is known as IGMP snooping. IGMP snooping allows a layer 2 based switch to analyse (transparently or not, depending on the functionality required) IGMP messages. When the switch processes an IGMP message from a content receiver node, or other node to which the content receiver nodes are attached to (for instance in case of IGMP proxy performed in the access node), it extracts the multicast address and records it against the port number of that node it received the IGMP message from. Thus, a layer 2 switch that employs IGMP snooping will only forward multicast content to the port and therefore the nodes that are interested in that content.

Although IGMP snooping can be used to more efficiently transport multicast content, the bandwidth demands on networks are growing, particularly in multicasting multimedia contents over IP technologies. It is important to efficiently transport multicast traffic over a network so that network resources are not wasted unnecessarily but also so that network resources are used as efficiently as possible. This is particularly relevant to "triple play" scenarios whose applications are very demanding in terms of quality of service (QoS) and quality of experience (QoE). For example, the disruption of a single multicast channel may impact hundreds of content receivers of a video service.

US 2007/0106782 A1 gives an example of a prior art multicast content flow control method.

### SUMMARY

According to a first aspect of the invention, claim 1 provides a telecommunication network comprising a plurality of nodes including a content source and at least one content receiver, the content source and the content receiver being connected via at least one switch node.

The switch node can easily extract the indication of the bandwidth requirement of the content and therefore implement bandwidth safeguard mechanisms as appropriate. Thus, the indication of the bandwidth requirement is invaluable in allowing the various switch nodes in the network manage the flow of multicast data to ensure high levels of QoS and QoE.

At least one of the switch nodes may be a layer 2 switch that uses IGMP snooping to process the multicast protocol message and extract the indication of the bandwidth requirement from the multicast protocol message. Alternatively, the switch node may be a layer 2 switch that uses Multicast Listener Discovery (MLD) snooping to extract the indication from the multicast protocol messages. This is advantageous as the use of layer 2 switches is cost effective. Further, as the indication of bandwidth requirement is inserted into a multicast protocol message, the known techniques of IGMP snooping and MLD, for example, can be used to allow the layer 2 switches and other equipment to extract the information. The switch nodes of the present invention can use bandwidth safeguard mechanisms without the need to implement other ad-hoc protocols such as RSVP.

Thus, while IGMP allows a layer 3 aware switch to forward to its attached switched sub-networks the superset of channels that are requested by the final hosts in the sub-network, there are not any means to determine if the capacity of the sub-network can handle the bandwidth of the total content. Thus, the present invention allows layer 2 based networks to perform multicast bandwidth optimisation without terminating specific resource allocation protocols that are particular to layer 3 based networks.

The multicast protocol message can be a message indicating to the multicast network that the content receiver wishes to receive the multicast content. Thus, the switch nodes only need to be configured to make use of the indication of bandwidth requirement, as techniques such as IGMP snooping are known to extract the indication. Further, the content receiver is adapted to receive information regarding the bandwidth requirement of the content that the content source provides in the form of an electronic program guide. Thus, the content receiver conveniently receives the bandwidth information for the content embedded in a widely used EPG. The content receiver therefore need only extract the bandwidth information from the EPG to form the indication of bandwidth requirement and include this in the multicast protocol message.

According to a second aspect of the invention, claim 3 provides a method of controlling the flow of multicast content in a telecommunication network, by a content source and a content receiver.

The method provides an efficient way of informing switch nodes of the network of the bandwidth requirement of multicast content as this information is included in a multicast protocol message, which can be snooped.

According to a third aspect of the invention claim 7 provides a content source adapted to form part of a telecommunication network and to provide content associated with a multicast address to at least one content receiver using multicast communication via at least one switch node.

According to a fourth aspect of the invention, claim 8 provides a content receiver adapted to form part of a telecommunication network and to receive content that is associated with a multicast address from a content source via multicast communication.

According to a fifth aspect of the invention claim 9 provides a switch node adapted to form part of a telecommunication network and to forward multicast content between a content source and at least one content receiver.

According to a sixth aspect of the invention, claim 11 provides a method of informing nodes of a telecommunication network of the bandwidth requirement of multicast content,

According to a seventh aspect of the invention, claim 12 provides a method of controlling the flow of multicast content across a telecommunication network by a switch node.

Further embodiments are defined by the dependent claims.

### BRIEF DESCRIPTION OF THE DRAWINGS

**Figure 1** shows an embodiment of a network including a content source and a content receiver;
**Figure 2** shows the form of an IGMP version 3 membership report message;
**Figure 3** shows the form of a group record within the message shown in Figure 2;
**Figure 4** shows the format of auxiliary data within the group record shown in Figure 3;
**Figure 5** shows an embodiment of the indication of the bandwidth requirement of content;
**Figure 6** shows an embodiment of a bandwidth configuration message;
**Figure 7** is a flow chart showing an embodiment of a method of operation of a telecommunication network;
**Figure 8** is a flow chart showing an embodiment of a method of operation of a switch node; and
**Figure 9** is a flow chart showing an embodiment of a method of operation of a content receiver.

### DETAILED DESCRIPTION

The embodiment of the present invention herein described has particular relevance to provision of multimedia content such as Internet Protocol Television (IPTV) from a content source to a plurality of content receivers using multicast routing schemes. This embodiment discusses the invention in terms of multicast communication over an IP infrastructure and in relation to known layer 3 multicast communication protocols, such as IGMP. It will be appreciated that IP multicast uses multicast agents located between the content source and the content receivers to record the membership of a multicast group and route messages and data accordingly. Various network nodes may be located between the multicast agents such as switches that may keep records of where multicast messages or data should be forwarded by way of IGMP snooping.

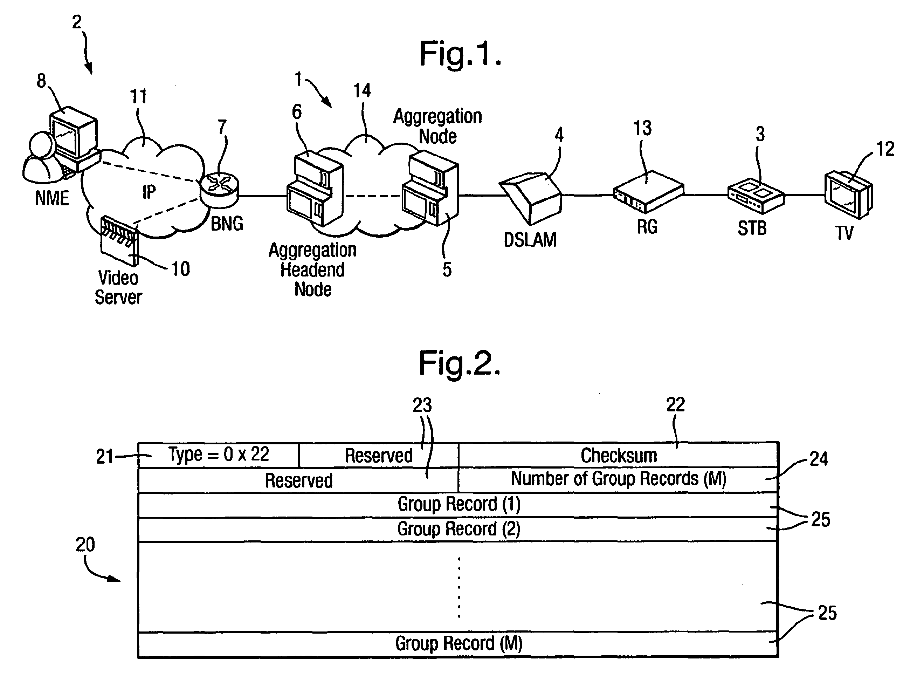

A network that supports IP multicast is shown in Figure 1. The network 1 comprises a plurality of nodes including a content source 2, a content receiver 3 connected via switch nodes 4, 5, 6, 7 adapted to forward messages and data between the content source 2 and content receiver 3. The switch nodes 4, 5, 6, 7 may form part of other networks over which data can travel between the content source 2 and content receiver 3

The content source 2 comprises a network management entity 8 and a content server 10 connected via an IP-based network 11 to the switch node 7 or "edge node", which comprises a Broadband Network Gateway (BNG) 7, according to DSL Forum indications and nomenclature. The network 11 may represent the Internet. The content receiver 3 comprises a set-top box, which receives and decodes the content received from the content source 2 and displays it on a display 12 comprising a television. The set-top box 3 is connected to a remote gateway 13, from which the owner of the set-top box 3 may receive other services such as telephone services or broadband internet services. Thus, the television 12, set-top box 3 and remote gateway 13 are typically located at the end-user's residence.

The remote gateway 13 is connected to the switch node 4, which comprises a digital subscriber line access multiplier (DSLAM). Several remote gateways 13 may be connected to the DSLAM 4. The DSLAM 4 is connected to the switch 5 which comprises an aggregation node. The aggregation node 5 has several DSLAMs 4 connected thereto thus serving other content receivers (only one shown).

The aggregation node 5 is connected to the aggregation head-end node 6 via other network nodes represented by an aggregation network 14. The other network nodes may be other aggregation nodes that are connected to other DSLAMs or may be other aggregation nodes that connect to further aggregation nodes or a combination thereof. The aggregation 14 may comprises a plurality of other sub-networks.

The aggregation head-end node 6 is connected to the BNG 7. The BNG 7 may be connected to other network nodes. The BNG 7 may be alternatively but equivalently referred to as an edge router, and is a layer 3 device, which acts as a local IGMP agent for the multicast services to be delivered to the network 14. The network 11 is typically composed of layer 3 nodes and interfaces with the service and/or content providers.

As is conventional in IP routing multicast schemes, the content source 2 makes available some content that is associated with an IP multicast address. The content source 2 makes the potential content receivers aware of the content and the associated multicast address by any appropriate means. If a content receiver 3 wishes to receive the content from the content source 2, it sends a message using IGMP protocol stating that it wishes to join the multicast group with the multicast group address. As is conventional in the art of IP multicast, this IGMP request is intended to be received by multicast agents (BNG 7 in the figure), that keep records of the direction multicast content having the said multicast address should be forwarded. PIM protocol is used between multicast agents to create a multicast distribution tree enabling the multicast messages and data to be routed efficiently within the IP network 11. Thus, multicast data forming the content that is addressed to the multicast group address is received by the multicast agents, which determine the direction it needs to be forwarded (and whether any replication is required, if the data needs to be routed in more than one direction) and forwards it. Thus, the data is "reverse path forwarded" away from the content source 2.

In a first embodiment of the present invention, the content source 2 provides content for receipt via a multicast routing scheme. The content source 2 determines the bandwidth requirement of the content it provides. For example, high definition television (HDTV) may require 12 to 19 Mb/s, while standard definition television (SDTV) may require 2 to 6 Mb/s. Details of the content available, the multicast group address associated with the content and an indication of the bandwidth requirement of the content is sent from the content source 2 to the content receiver 3. In this first embodiment, this information is sent to the content receiver 3 within data for an electronic program guide (EPG).

A user of the content receiver 3 can then select the content they wish to view. The content receiver 3 is adapted to extract the multicast group address associated with the content as well as the indication of the bandwidth requirement of the content from the EPG and send an IGMP message containing this information.

The format of an IGMP message 20 is shown in Figure 2. The form of the IGMP message proposed in the present embodiment is based on the Unsolicited Membership Report (UMR) defined in the standard for IGMP version 3. The modified UMR of this embodiment is referred to as the Enhanced Unsolicited Membership Report (EUMR). The IGMP message 20 comprises a "Type" field 21, a checksum 22, two reserved fields labelled 23, a "Number of Group Records (M)" field 24 and the Group Records 25.

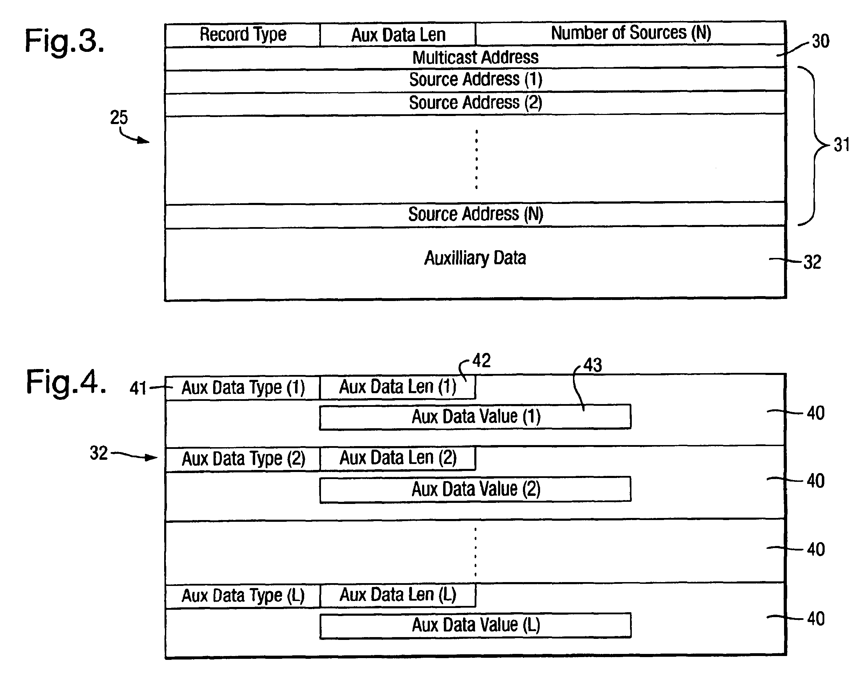

The format of one of the group records 25 is shown in Figure 3. The group record 25 contains fields for the multicast address 30, the source addresses 31 and auxiliary data 32.

The format of the auxiliary data 32 is shown in Figure 4. The auxiliary data 32 is divided into auxiliary data records 40. Each auxiliary data record 40 includes an Auxiliary Data Type field 41, an Auxiliary Data Length field 42 and an Auxiliary Data Value field 43.

The first embodiment of the invention utilizes an EUMR which includes an indication of the bandwidth requirement of the content that is inserted in the IGMP message 20 as an auxiliary data record 40, wherein the Auxiliary Data Value field 43 includes the bandwidth required for the content in bits per second.

Thus, the content receiver 3 inserts the indication of bandwidth in the IGMP message 20 to form the EUMR, which it then uses to "join" a multicast group with the other information required for IP multicast. Thus, the IGMP message 20 is used to join the multicast group and this is registered by the multicast agent, BNG 7.

The DSLAM 4, the aggregation node 5 and/or the aggregation head-end node 6 (and any other aggregation node in the aggregation network 14) can inspect IGMP packets by IGMP snooping. They are also adapted to extract the indication of bandwidth from the EUMR IGMP message and use it to control the transmission of content data through the sub-networks the nodes 4, 5, 6 form part of. Thus, the nodes 4, 5, 6 are able to efficiently use the bandwidth it has assigned for the provision of multicast content. This is advantageous as the aggregation network 14 and nodes 5, 6 can comprise layer 2 switches that have IGMP snooping capabilities. This is cost effective while providing significant network management capabilities. Further, the nodes 5, 6 and the nodes of the aggregation network 14 advantageously have bandwidth allocation functionality to make full use of the indication of the bandwidth requirement of the content that is included in the IGMP message.

For example, let us assume that the content source 2 has available ten channels of HDTV content (at a bandwidth requirement of 19Mb/s) and one hundred channels of SDTV content (at a bandwidth requirement of 2Mb/s). Let us also assume that in a given aggregation node 6 a bandwidth of 100 Mb/s has been allocated for the provision of multicast services.

Without the indication of the bandwidth requirement of the content, the only way an aggregation node 5, 6 can manage the flow of multicast channel content is to configure a limit on the number of channels of content (of either HDTV or SDTV) that passes through it at the same time. In a worst case scenario the aggregation node 6 may be configured to accept only five contents on the basis that only five contents of HDTV at 19 Mb/s could be carried by a 100 Mb/s allocation. If only SDTV was then requested, the aggregation node would limit the number of contents to five. Thus, only 5 x 2Mb/s = 10Mb/s of a 100Mb/s allocation would be utilized.

Alternatively, the aggregation node 6 may be configured to accept twenty five contents on the basis that the average bandwidth requirement of the HDTV and SDTV content supplied by the content source 2 is 3.9Mb/s and therefore twenty five contents at 3.9Mb/s could be accommodated by the 100Mb/s allocation. However, if too many instances of HDTV content are requested, the IGMP requests are snooped and processed, but the content cannot be distributed without serious degradation of network performance due to frame loss. The network performance degradation will be experienced by content receivers already receiving content and, depending on the implementation of the layer 2 switched network, also by other users utilising other services.

However, by exploitation of the indication of the bandwidth requirement of the embodiment described above, the aggregation nodes 5, 6 (and any aggregation nodes in between in network 14) and DSLAM 4 are able to use the bandwidth available for the provision of the multicast content more efficiently. In particular, the aggregation nodes 5, 6 and DSLAM 4 may control the forwarding of content by refusing the request for the content if its bandwidth allocation would be exceeded. Alternatively, the nodes 4, 5, 6 may accept the request for content and perform lower priority traffic pre-emption, for example. This can be done in different parts of the network, checking in each part if there are bottlenecks that need to be taken into account when deciding if a given multicast channel can be admitted and to ensure the proper QoS in the network, or not.

In a second embodiment, the content source 2 does not evaluate the bandwidth requirement of the content. Instead, the BNG 7 is programmed with the indication of the bandwidth requirements of the content associated with each multicast address that is supplied by the content source 2 (or any other content source). The BNG 7 is adapted to send this information as a Bandwidth Configuration (BWC) message. The BWC message comprises a new message type adapted to form part of the IGMP protocol. As the BWC message is an IGMP protocol message, it can be snooped by known means by the aggregation nodes 5, 6 (and any nodes in the aggregation network 14) and the DSLAM 4. The nodes 4, 5, 6 are adapted to snoop the BWC and extract the indication of the bandwidth of the content. The nodes can therefore control the forwarding of multicast content as discussed in relation to the previous embodiment or however else is required.

The BNG 7 is pro-active and therefore is adapted to send the BWC message periodically. The DSLAM 4 and aggregation nodes 5, 6 can snoop the BWC message and take advantage of the indication of the bandwidth requirement and implement any bandwidth safeguard mechanisms as required. Alternatively, the BNG 7 may be configured to operate "on-demand" such that it sends the BWC message when it receives a request for content i.e. a IGMP "join" message.

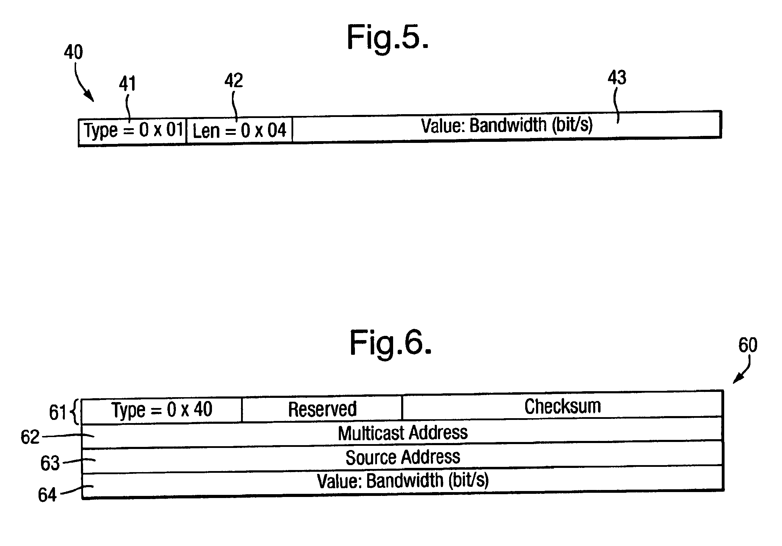

An embodiment of a BWC is shown in Figure 6. The BWC 60 comprises a header 61 comprising a "Type" field, a "Reserved" field and a checksum. The BWC 60 also comprises a field for the multicast address 62, a field for the source address 63 and a value field 64 for the indication of the bandwidth requirement of the content. The indication of the bandwidth requirement of the content is specified in bits/s.

In the embodiment the "Type" field is assigned the value 0x40, which is a provisional value to designate the BWC. The checksum is the 16-bi one's complement of the one's complement sum of the whole BWC IGMP message i.e. the entire IP payload. The multicast address field 62 contains the multicast address whose bandwidth is specified. The source address field 63 contains the IP address of the source for the multicast IP address whose bandwidth is specified. The value field 64 contains a 4 byte value for the indication of the bandwidth requirement of the content in bits/s. The source address field may be assigned as an "any source" value (e.g. 0.0.0.0) to account for the possible case in which the source address has not been specified.

Another embodiment of a BWC (not shown) can additionally comprise a "Priority" field, which could be used to assign a priority to the multicast channel so that channel pre-emption could be performed, in the case where the network operator supports this functionality.

It will be appreciated that the BWC may include information about a list of multicast channels instead of information about a single channel. This may reduce the processing overhead of snooping equipment, which now has to intercept and process one BWC message with information about more that one multicast channel instead of many BWC messages, each one with information about one multicast channel.

It will be appreciated that the indication of the bandwidth requirement of the content need not be a value in bits/s. Instead it may specify a category of the content data. For example, predetermined categories may be defined such as "SDTV MPEG-4 PAL" or "HDTV" and the nodes 4, 5, 6 interpret the categories in assessing how to control the flow of multicast data.

A third embodiment of the invention is based on the second embodiment described above except that instead of the BNG 7 being programmed with the indication of the bandwidth requirement of the content, the aggregation head-end node 6 is. This enables the aggregation node 5 and DSLAM 4 (and any other appropriately configured nodes in the sub-network 14) to snoop the BWC and control the forwarding of multicast content data. The remainder of the embodiment is identical to the previous embodiment.

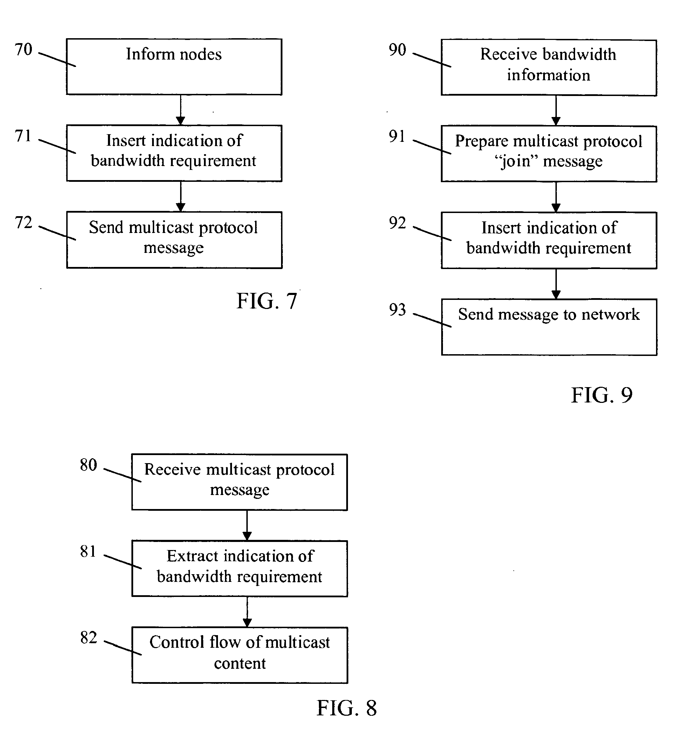

The method shown in Figure 7 includes the step 71 comprising informing particular nodes of the telecommunication network of the bandwidth requirement of the content supplied by the content source 2. This may comprise the content source sending the information in the form of an EPG or the particular nodes may be programmed with such information. At step 71 this information is used to form the indication of bandwidth requirement, which is inserted in a multicast protocol message 20, 60 along with the multicast address of the content. At step 72 the multicast protocol message is sent across the network for receipt by the relevant nodes, such as layer 3 aware switch nodes.

The receipt of the multicast protocol message by a node (4, 5, 6) for example is shown in step 80 of Figure 8. The node may snoop the multicast protocol message 20, 60 and extract the indication of bandwidth requirement along with the multicast address of the content, as shown in step 81. At step 82 the switch node controls the flow of multicast content associated with the multicast address using the indication of bandwidth requirement of the content, as discussed above.

Figure 9 shows an embodiment of the method of operation of a content receiver 3. Information regarding the bandwidth requirement of content supplied by the content source is received at step 90. This is in the form of an EPG, but, as can be appreciated, the content receiver 3 may receive this information in some other way. When the content receiver wishes to receive multicast content, it prepares a multicast protocol message 20 with the multicast address of the content at step 91. Using the information received at step 90, an indication of the bandwidth requirement of the content to be requested is inserted into the multicast protocol message 20, as shown in step 92. This EUMR multicast protocol message is then sent to the network for receipt by the multicast agents and to be snooped or processed by any nodes 4, 5, 6 or equipment configured to do so.

## Claims

1. A telecommunication network (1) comprising a plurality of nodes including a content source (10) and at least one content receiver (3), the content source (10) and the or each content receiver (3) being connected via at least one switch node (7), wherein the content source (10) is adapted to provide content that is associated with a multicast address to the at least one content receiver (3) using multicast communication, the content receiver (3) being adapted to receive information regarding the bandwidth requirement of the content that the content source (10) provides embedded in an electronic program guide and the content receiver (3) being adapted to use this information to form the indication of the bandwidth requirement of the content and to include this indication along with the corresponding multicast address within a multicast protocol message, and wherein the switch node (7) is adapted to extract said indication from the multicast protocol message and control the flow of content in response to said indication of the bandwidth requirement of the content.

2. A telecommunication network according to claim 1, in which the switch node (7) is a layer 2 switch adapted to use Internet Group Management Protocol snooping to process the multicast protocol messages and extract the indication of bandwidth requirement from the multicast protocol messages.

3. A method of controlling the flow of multicast content in a telecommunication network, the network comprising a plurality of nodes including a content source and at least one content receiver, the content source and the or each content receiver being connected via at least one switch node, wherein the content source is adapted to provide content that is associated with a multicast address to the at least one content receiver using multicast communication, the method comprising the steps of:
a) providing information (70), embedded in an electronic program guide, regarding the bandwidth requirement of the content associated with the multicast address that the content source provides;
b) including (71) an indication of the bandwidth requirement of the content supplied by the content source along with the corresponding multicast address within a multicast protocol message (72), wherein the information regarding the bandwidth requirement embedded in the electronic program guide is used to form the indication.

4. A method according to claim 3, further comprising the step of;
c) extracting said indication from the multicast protocol message and controlling the flow of content in response to said indication of the bandwidth requirement of the content.

5. A method according to claim 3 or 4, wherein the step of providing information comprises:
a1) receiving information regarding the bandwidth requirement of the content associated with the multicast address,
a2) sending a multicast protocol message to the telecommunication network indicating that the content receiver wishes to receive the content associated with the multicast address, the message being embedded with an indication of the bandwidth requirement of the content requested by the content receiver derived from the information received at step a1).

6. A method according to claim 4 or 5, wherein the step of controlling the flow comprises processing multicast protocol messages and extracting from said messages an indication of the bandwidth requirement of the content supplied by the content source along with a multicast address associated with the content.

7. A content source (10) adapted to form part of a telecommunication network (1) and to provide content associated with a multicast address to at least one content receiver (3) using multicast communication via at least one switch node (7), the content source (10) being adapted to supply to the at least one content receiver (3) information regarding the bandwidth requirement of the content associated with the multicast address, wherein the information regarding the bandwidth requirement of the content that the content source (10) provides is embedded in an electronic program guide.

8. A content receiver (3) adapted to form part of a telecommunication network (1) and to receive content that is associated with a multicast address from a content source (10) via multicast communication, the content receiver (3) being further adapted to receive, from the content source (10), information embedded in an electronic program guide regarding the bandwidth requirement of the content associated with the multicast address, the content receiver being adapted to send a multicast protocol message to the telecommunication network (1) indicating that the content receiver (3) wishes to receive the content associated with the multicast address, the message being embedded with an indication of the bandwidth requirement of the content requested by the content receiver (3) derived from the information received from the content source (10).

9. A switch node (7) adapted to form part of a telecommunication network (1) and to forward multicast content between a content source (10) and at least one content receiver (3), the switch node (7) being adapted to process multicast protocol messages received from the at least one content receiver(3) and extract from said messages an indication of the bandwidth requirement of the content supplied by the content source (10) along with a multicast address associated with the content, wherein the indication received from the content receiver (3) is formed based on information embedded in an electronic program guide, and to control the flow of multicast content in response to said indication of the bandwidth requirement of the content.

10. A switch node (7) according to claim 9, in which the switch node is a layer 2 switch that uses Internet Group Management Protocol snooping to process the multicast protocol messages.

11. A method of informing nodes of a telecommunication network of the bandwidth requirement of multicast content, the telecommunication network comprising a content receiver adapted to receive content that is associated with a multicast address from a content source via multicast communication, the content receiver performing the steps of:
a) receiving (90) information regarding the bandwidth requirement of the content associated with the multicast address embedded in an electronic program guide,
b) sending (93) a multicast protocol message to the telecommunication network indicating that the content receiver wishes to receive the content associated with the multicast address (91), the message being embedded with an indication of the bandwidth requirement (92) of the content requested by the content receiver derived from the information received at step a).

12. A method of controlling the flow of multicast content across a telecommunication network, the network comprising a switch node adapted to forward multicast content between a content source and at least one content receiver, the switch node performing the steps of:
a) processing multicast protocol messages received (80) from the at least one content receiver and extracting (81) from said messages an indication of the bandwidth requirement of the content supplied by the content source along with a multicast address associated with the content;
b) controlling (82) the flow of multicast content in response to said indication of the bandwidth requirement of the content, wherein the indication is formed by the at least one content receiver using information embedded in an electronic program guide.

## Patentansprüche

1. Telekommunikationsnetz (1), umfassend eine Mehrzahl von Knoten, die eine Inhaltsquelle (10) und mindestens einen Inhaltsempfänger (3) umfassen, wobei die Inhaltsquelle (10) und der oder jeder Inhaltsempfänger (3) über mindestens einen Vermittlungsknoten (7) verbunden sind, wobei die Inhaltsquelle (10) so ausgelegt ist, dass sie Inhalt, der mit einer Multicast-Adresse assoziiert ist, für den mindestens einen Inhaltsempfänger (3) unter Verwendung von Multicast-Kommunikation bereitstellt, wobei der Inhaltsempfänger (3) so ausgelegt ist, dass er Informationen in Bezug auf den Bandbreitenbedarf des von der Inhaltsquelle (10) bereitgestellten Inhalts empfängt, die in einen elektronischen Programmführer eingebettet sind, und der Inhaltsempfänger (3) so ausgelegt ist, dass er diese Informationen verwendet, um die Angabe des Bandbreitenbedarfs des Inhalts zu erzeugen und diese Angabe zusammen mit der entsprechenden Multicast-Adresse in eine Multicast-Protokollnachricht aufzunehmen, und wobei der Vermittlungsknoten (7) so ausgelegt ist, dass er die Angabe aus der Multicast-Protokollnachricht extrahiert und den Inhaltsfluss als Reaktion auf die Angabe des Bandbreitenbedarfs des Inhalts steuert.

2. Telekommunikationsnetz nach Anspruch 1, wobei der Vermittlungsknoten (7) ein Schicht-2-Switch ist, der so ausgelegt ist, dass er Internet Group Management Protocol-Schnüffeln verwendet, um die Multicast-Protokollnachrichten zu verarbeiten und die Angabe des Bandbreitenbedarfs aus den Multicast-Protokollnachrichten zu extrahieren.

3. Verfahren zur Steuerung des Flusses von Multicast-Inhalt in einem Telekommunikationsnetz, wobei das Netz eine Mehrzahl von Knoten umfasst, die eine Inhaltsquelle und mindestens einen Inhaltsempfänger umfassen, wobei die Inhaltsquelle und der oder jeder Inhaltsempfänger über mindestens einen Vermittlungsknoten verbunden sind, wobei die Inhaltsquelle so ausgelegt ist, dass sie Inhalt, der mit einer Multicast-Adresse assoziiert ist, für den mindestens einen Inhaltsempfänger unter Verwendung von Multicast-Kommunikation bereitstellt, und das Verfahren die folgenden Schritte umfasst:
a) Bereitstellen von Informationen (70), eingebettet in einen elektronischen Programmführer, in Bezug auf den Bandbreitenbedarf des Inhalts, der mit der Multicast-Adresse assoziiert ist und den die Inhaltsquelle bereitstellt;
b) Aufnehmen (71) einer Angabe des Bandbreitenbedarfs des Inhalts, der von der Inhaltsquelle bereitgestellt wird, zusammen mit der entsprechenden Multicast-Adresse in eine Multicast-Protokollnachricht (72), wobei die in den elektronischen Programmführer eingebetteten Informationen in Bezug auf den Bandbreitenbedarf zum Erzeugen der Angabe verwendet werden.

4. Verfahren nach Anspruch 3, ferner umfassend den folgenden Schritt:
c) Extrahieren der Angabe aus der Multicast-Protokollnachricht und Steuern des Inhaltsflusses als Reaktion auf die Angabe des Bandbreitenbedarfs des Inhalts.

5. Verfahren nach Anspruch 3 oder 4, wobei der Schritt des Bereitstellens von Informationen umfasst:
a1) Empfangen von Informationen in Bezug auf den Bandbreitenbedarf des Inhalts, der mit der Multicast-Adresse assoziiert ist,
a2) Senden einer Multicast-Protokollnachricht an das Telekommunikationsnetz mit der Angabe, dass der Inhaltsempfänger wünscht, den Inhalt zu empfangen, der mit der Multicast-Adresse assoziiert ist, wobei in die Nachricht eine Angabe des Bandbreitenbedarfs des vom Inhaltsempfänger angeforderten Inhalts eingebettet ist, die von den in Schritt a1) empfangenen Informationen abgeleitet ist.

6. Verfahren nach Anspruch 4 oder 5, wobei der Schritt des Steuerns des Flusses ein Verarbeiten von Multicast-Protokollnachrichten und Extrahieren einer Angabe des Bandbreitenbedarfs des von der Inhaltsquelle gelieferten Inhalts zusammen mit einer Multicast-Adresse, die mit dem Inhalt assoziiert ist, aus den Nachrichten umfasst.

7. Inhaltsquelle (10), die so ausgelegt ist, dass sie einen Teil eines Telekommunikationsnetzes (1) bildet und Inhalt, der mit einer Multicast-Adresse assoziiert ist, unter Verwendung von Multicast-Kommunikation über mindestens einen Vermittlungsknoten (7) für mindestens einen Inhaltsempfänger (3) bereitstellt, wobei die Inhaltsquelle (10) so ausgelegt ist, dass sie Informationen in Bezug auf den Bandbreitenbedarf des Inhalts, der mit der Multicast-Adresse assoziiert ist, an den mindestens einen Inhaltsempfänger (3) liefert, wobei die Informationen in Bezug auf den Bandbreitenbedarf des Inhalts, den die Inhaltsquelle (10) bereitstellt, in einen elektronischen Programmführer eingebettet sind.

8. Inhaltsempfänger (3), der so ausgelegt ist, dass er einen Teil eines Telekommunikationsnetzes (1) bildet und Inhalt, der mit einer Multicast-Adresse assoziiert ist, über eine Multicast-Kommunikation von einer Inhaltsquelle (10) empfängt, wobei der Inhaltsempfänger (3) ferner so ausgelegt ist, dass er von der Inhaltsquelle (10) Informationen, die in einen elektronischen Programmführer eingebettet sind, in Bezug auf den Bandbreitenbedarf des Inhalts empfängt, der mit der Multicast-Adresse assoziiert ist, wobei der Inhaltsempfänger so ausgelegt ist, dass er eine Multicast-Protokollnachricht an das Telekommunikationsnetz (1) mit der Angabe sendet, dass der Inhaltsempfänger (3) wünscht, den Inhalt zu empfangen, der mit der Multicast-Adresse assoziiert ist, wobei in die Nachricht eine Angabe des Bandbreitenbedarfs des vom Inhaltsempfänger (3) angeforderten Inhalts eingebettet ist, die von den Informationen abgeleitet ist, die von der Inhaltsquelle (10) empfangen werden.

9. Vermittlungsknoten (7), der so ausgelegt ist, dass er einen Teil eines Telekommunikationsnetzes (1) bildet und Multicast-Inhalt zwischen einer Inhaltsquelle (10) und mindestens einem Inhaltsempfänger (3) weiterleitet, wobei der Vermittlungsknoten (7) so ausgelegt ist, dass er Multicast-Protokollnachrichten verarbeitet, die von dem mindestens einen Inhaltsempfänger (3) empfangen werden, und eine Angabe des Bandbreitenbedarfs des von der Inhaltsquelle (10) gelieferten Inhalts zusammen mit einer Multicast-Adresse, die mit dem Inhalt assoziiert ist, aus den Nachrichten extrahiert, wobei die vom Inhaltsempfänger (3) empfangene Angabe basierend auf Informationen erzeugt ist, die in einen elektronischen Programmführer eingebettet sind, und den Fluss von Multicast-Inhalt als Reaktion auf die Angabe des Bandbreitenbedarfs des Inhalts steuert.

10. Vermittlungsknoten (7) nach Anspruch 9, wobei der Vermittlungsknoten ein Schicht-2-Switch ist, der Internet Group Management Protocol-Schnüffeln verwendet, um die Multicast-Protokollnachrichten zu verarbeiten.

11. Verfahren zum Informieren von Knoten eines Telekommunikationsnetzes über den Bandbreitenbedarf von Multicast-Inhalt, wobei das Telekommunikationsnetz einen Inhaltsempfänger umfasst, der so ausgelegt ist, dass er Inhalt, der mit einer Multicast-Adresse assoziiert ist, über Multicast-Kommunikation von einer Inhaltsquelle empfängt, wobei der Inhaltsempfänger folgende Schritte ausführt:
a) Empfangen (90) von Informationen in Bezug auf den Bandbreitenbedarf des Inhalts, der mit der Multicast-Adresse assoziiert ist, eingebettet in einen elektronischen Programmführer,
b) Senden (93) einer Multicast-Protokollnachricht an das Telekommunikationsnetz mit der Angabe, dass der Inhaltsempfänger wünscht, den Inhalt zu empfangen, der mit der Multicast-Adresse assoziiert ist (91), wobei in die Nachricht eine Angabe des Bandbreitenbedarfs (92) des vom Inhaltsempfänger angeforderten Inhalts eingebettet ist, die von den in Schritt a) empfangenen Informationen abgeleitet ist.

12. Verfahren zur Steuerung des Flusses von Multicast-Inhalt über ein Telekommunikationsnetz, wobei das Netz einen Vermittlungsknoten umfasst, der so ausgelegt ist, dass er Multicast-Inhalt zwischen einer Inhaltsquelle und mindestens einem Inhaltsempfänger weiterleitet, wobei der Vermittlungsknoten die folgenden Schritte ausführt:
a) Verarbeiten von Multicast-Protokollnachrichten, die von dem mindestens einen Inhaltsempfänger empfangen werden (80), und Extrahieren (81) einer Angabe des Bandbreitenbedarfs des von der Inhaltsquelle gelieferten Inhalts zusammen mit einer Multicast-Adresse, die mit dem Inhalt assoziiert ist, aus den Nachrichten;
b) Steuern (82) des Flusses von Multicast-Inhalt als Reaktion auf die Angabe des Bandbreitenbedarfs des Inhalts, wobei die Angabe durch den mindestens einen Inhaltsempfänger unter Verwendung von Informationen erzeugt wird, die in einen elektronischen Programmführer eingebettet sind.

## Revendications

1. Réseau de télécommunication (1) comprenant une pluralité de noeuds incluant une source de contenu (10) et au moins un récepteur de contenu (3), la source de contenu (10) et le ou chaque récepteur de contenu (3) étant connectés via au moins un noeud de commutation (7), dans lequel la source de contenu (10) est adaptée pour fournir un contenu qui est associé à une adresse de multidiffusion à au moins un récepteur de contenu (3) en utilisant une communication par multidiffusion, le récepteur de contenu (3) étant adapté pour recevoir une information concernant l'exigence en bande passante du contenu que la source de contenu (10) fournit incorporé dans un guide de programme électronique et le récepteur de contenu (3) étant adapté pour utiliser cette information pour former l'indication de l'exigence en bande passante du contenu et inclure cette indication conjointement à l'adresse de multidiffusion correspondante à l'intérieur d'un message de protocole de multidiffusion, et dans lequel le noeud de commutation (7) est adapté pour extraire ladite indication du message de protocole de multidiffusion et commander le flux de contenu en réponse à ladite indication de l'exigence en bande passante du contenu.

2. Réseau de télécommunication selon la revendication 1, dans lequel le noeud de commutation (7) est un commutateur de couche 2 adapté pour utiliser une surveillance de trafic de protocole de gestion de groupe Internet pour traiter les messages de protocole de multidiffusion et extraire l'indication d'exigence en bande passante des messages de protocole de multidiffusion.

3. Procédé de commande du flux de contenu de multidiffusion dans un réseau de télécommunication, le réseau comprenant une pluralité de noeuds incluant une source de contenu et au moins un récepteur de contenu, la source de contenu et le ou chaque récepteur de contenu étant connectés via au moins un noeud de commutation, dans lequel la source de contenu est adaptée pour fournir un contenu qui est associé à une adresse de multidiffusion à au moins un récepteur de contenu en utilisant une communication par multidiffusion, le procédé comprenant les étapes consistant à :
a) fournir une information (70), incorporée dans un guide de programme informatique, concernant l'exigence en bande passante du contenu associé à l'adresse de multidiffusion que la source de contenu fournit ;
b) inclure (71) une indication de l'exigence en bande passante du contenu fourni par la source de contenu conjointement à l'adresse de multidiffusion correspondante à l'intérieur d'un message de protocole de multidiffusion (72), dans lequel l'information concernant l'exigence en bande passante incorporée dans le guide de programme électronique est utilisée pour former l'indication.

4. Procédé selon la revendication 3, comprenant en outre l'étape consistant à :
c) extraire ladite indication du message de protocole de multidiffusion et commander le flux de contenu en réponse à ladite indication de l'exigence en bande passante du contenu.

5. Procédé selon la revendication 3 ou 4, dans lequel l'étape de fourniture d'information comprend de :
a1) recevoir une information concernant l'exigence en bande passante du contenu associé à l'adresse de multidiffusion,
a2) envoyer un message de protocole de multidiffusion au réseau de télécommunication indiquant que le récepteur de contenu souhaite recevoir le contenu associé à l'adresse de multidiffusion, le message étant incorporé avec une indication de l'exigence en bande passante du contenu demandé par le récepteur de contenu déduite de l'information reçue à l'étape a1).

6. Procédé selon la revendication 4 ou 5, dans lequel l'étape de commande du flux comprend de traiter des messages de protocole de multidiffusion et d'extraire desdits messages une indication de l'exigence en bande passante du contenu fourni par la source de contenu conjointement à une adresse de multidiffusion associée au contenu.

7. Source de contenu (10) adaptée pour faire partie d'un réseau de télécommunication (1) et pour fournir un contenu associé à une adresse de multidiffusion à un au moins un récepteur de contenu (3) en utilisant une communication par multidiffusion via au moins un noeud de commutation (7), la source de contenu (10) étant adaptée pour alimenter au moins un récepteur de contenu (3) en informations concernant l'exigence en bande passante du contenu associé à l'adresse de multidiffusion, dans lequel l'information concernant l'exigence en bande passante du contenu que la source de contenu (10) fournit est incorporée dans un guide de programme électronique.

8. Récepteur de contenu (3) adapté pour faire partie d'un réseau de télécommunication (1) et recevoir un contenu qui est associé à une adresse de multidiffusion depuis une source de contenu (10) via une communication par multidiffusion, le récepteur de contenu (3) étant en outre adapté pour recevoir, depuis la source de contenu (10), une information incorporée dans un guide de programme électronique concernant l'exigence en bande passante du contenu associée à l'adresse de multidiffusion, le récepteur de contenu étant adapté pour envoyer un message de protocole de multidiffusion au réseau de télécommunication (1) indiquant que le récepteur de contenu (3) souhaite recevoir le contenu associé à l'adresse de multidiffusion, le message étant incorporé avec une indication de l'exigence en bande passante du contenu demandée par le récepteur de contenu (3) déduite de l'information reçue depuis la source de contenu (10).

9. Noeud de commutation (7) adapté pour faire partie d'un réseau de télécommunication (1) et pour acheminer un contenu de multidiffusion entre une source de contenu (10) et au moins un récepteur de contenu (3), le noeud de commutation (7) étant adapté pour traiter des messages de protocole de multidiffusion reçus depuis au moins un récepteur de contenu (3) et extraire desdits messages une indication de l'exigence en bande passante du contenu fournie par la source de contenu (10) conjointement à une adresse de multidiffusion associée au contenu, dans lequel l'indication reçue depuis le récepteur de contenu (3) est formée sur la base d'une information incorporée dans un guide de programme électronique, et commander le flux de contenu de multidiffusion en réponse à ladite indication de l'exigence en bande passante du contenu.

10. Noeud de commutation (7) selon la revendication 9, dans lequel le noeud de commutation est un commutateur de couche 2 qui utilise une surveillance de trafic de protocole de gestion de groupe Internet pour traiter les messages de protocole de multidiffusion.

11. Procédé d'information des noeuds d'un réseau de télécommunication de l'exigence en bande passante du contenu de multidiffusion, le réseau de télécommunication comprenant un récepteur de contenu adapté pour recevoir un contenu qui est associé à une adresse de multidiffusion depuis une source de contenu via une communication par multidiffusion, le récepteur de contenu effectuant les étapes consistant à :
a) recevoir (90) une information concernant l'exigence en bande passante du contenu associé à l'adresse de multidiffusion incorporée dans un guide de programme électronique,
b) envoyer (93) un message de protocole de multidiffusion au réseau de télécommunication indiquant que le récepteur de contenu souhaite recevoir le contenu associé à l'adresse de multidiffusion (91), le message étant incorporé avec une indication de l'exigence en bande passante (92) du contenu demandé par le récepteur de contenu déduite de l'information reçue à l'étape a).

12. Procédé de commande du flux d'un continu de multidiffusion au travers d'un réseau de télécommunication, le réseau comprenant un noeud de commutation adapté pour acheminer un contenu de multidiffusion entre une source de contenu et au moins un récepteur de contenu, le noeud de commutation effectuant les étapes consistant à :
a) traiter des messages de protocole de multidiffusion (80) reçus depuis au moins un récepteur de contenu et extraire (81) desdits messages une indications de l'exigence en bande passante du contenu fourni par la source de contenu conjointement à une adresse de multidiffusion associée au contenu ;
b) commander (82) le flux de contenu de multidiffusion en réponse à ladite indication de l'exigence en bande passante du contenu, dans lequel l'indication est formée par au moins un récepteur de contenu en utilisant l'information incorporée dans un guide de programme électronique.
